# EUROPÄISCHE PATENTANMELDUNG

(11) **EP 2 270 435 A2**
(43) Veröffentlichungstag der Anmeldung: **05.01.2011**
(21) Anmeldenummer: 10004973.3
(22) Anmeldetag: 11.05.2010
(51) Int. Cl.: G01D 5/30

(54) **Optischer Sensorfinger**

(30) Priorität: 30.06.2009 DE 202009008971 U
(71) Anmelder: Bürkert Werke GmbH, 74653 Ingelfingen (DE)
(72) Erfinder: Rabus, Dominik, D-74670 Forchtenberg (DE); Koenig, Bertrand, F-67220 Saint Pierre Bois (FR); Flack, Renate, D-74676 Niedernhall (DE)
(74) Vertreter: Prinz & Partner

(57) **Zusammenfassung**

Ein modularer optischer Sensorfinger ist im Wesentlichen aufgebaut aus einem Grundgehäuse, einem Halter, einem Schutzrohr und einem Sensorkopf. Je nach gewünschtem Messprinzip und Anwendungsfall lassen sich Halter und Sensorkopf, die in verschiedenen Ausführungen bereit gestellt werden, leicht austauschen. Außerdem kann eine Reihe von Sensorfingern, die auf unterschiedlichen optischen Messprinzipien beruhen, unter Verwendung vieler Gleichteile und Anpassung nur weniger anderer Teile einfach hergestellt werden.

Das Grundgehäuse ist vorzugsweise mehrteilig aus Bodenteil, Hülse und Deckel aufgebaut, die zum Beispiel mittels Gewinde fest und lösbar miteinander verbunden werden.

## Beschreibung

Die Erfindung betrifft einen modularen optischen Sensorfinger zur Erfassung von Mediumseigenschaften in einem Rohrleitungsabschnitt.

Gattungsgemäße Sensorfinger ragen mit einem Ende in einen Leitungsabschnitt und stehen in direktem Kontakt zum zu messenden Medium.

Es sind gemäß dem Stand der Technik verschiedene optische Sensoren bekannt, die mit unterschiedlichen Messverfahren wie beispielsweise Streulicht-oder Durchlichtmessung arbeiten. Üblicherweise benötigt man für jedes gewünschte Messprinzip ein eigenes Gerät. So wird entsprechend des ungefähren Konzentrationsbereichs eines Stoffs in einer Flüssigkeit schon allein der Trübungsgrad mittels 90°- oder 180°-Streulichtmessung bei Einsetzung zweier Trübungsmesssysteme bestimmt.

Deshalb ist ein flexibles System für optische Messungen wünschenswert, das zur Anwendung mehrerer Messprinzipien geeignet ist. Durch die in den Patentansprüchen angegebene Erfindung wird ein solches System bereitgestellt.

Erfindungsgemäß wird ein modularer optischer Sensorfinger im Wesentlichen aufgebaut aus einem Grundgehäuse, einem Halter, einem Schutzrohr und einem Sensorkopf. Je nach gewünschtem Messprinzip und Anwendungsfall lassen sich Halter und Sensorkopf, die in verschiedenen Ausführungen bereit gestellt werden, leicht austauschen. Außerdem kann eine Reihe von Sensorfingern, die auf unterschiedlichen optischen Messprinzipien beruhen, unter Verwendung vieler Gleichteile und Anpassung nur weniger anderer Teile einfach hergestellt werden.

Das Grundgehäuse ist vorzugsweise mehrteilig aus Bodenteil, Hülse und Deckel aufgebaut, die zum Beispiel mittels Gewinde fest und lösbar miteinander verbunden werden.

Das Grundgehäuse nimmt Elektronik, wie Ansteuerung des Sensors, Ansteuerung einer optionalen Anzeige- und Bedieneinheit sowie optische Bauelemente, wie LEDs, Photodioden und Laser, auf, die auf einer Platine angeordnet sind.

Die Platine wird in das Bodenteil des Grundgehäuses eingelegt, wobei die optischen Bauelemente so auf der Platine angeordnet sind, dass deren elektrische Kontaktierungen in das Grundgehäuse hineinragen und die Kapselungen der optischen Bauelemente vom Grundgehäuse weg in Richtung Schutzrohr weisen. Diese Art der Anordnung der optischen Bauelemente ermöglicht ein unkompliziertes Austauschen der optischen Bauelemente. Außerdem ist es von Vorteil, dass die optischen Bauelemente außerhalb des Sensorkopfs angeordnet sind.

Die optischen Bauelemente ragen mit ihren Kapselungen in Ausnehmungen im Steckverbinder, welcher diesen gegenüberliegend den Halter aufnimmt.

Die optischen Bauelemente werden mit Hilfe dieses Steckverbinders mit Lichtleitern verbunden, welche auf einer Längsseite auf dem Halter befestigt sind und bis in den Sensorkopf geführt werden. Im Halter können Nuten vorgesehen sein, welche die gewünschten Positionierungen der Lichtleiter festlegen.

Dabei ist mindestens ein Lichtleiter mit einem Lichtsender auf der Platine verbunden und leitet Licht durch den Lichtleiter bis zu dem Ende des Lichtleiters, das in den Sensorkopf ragt. Im Sensorkopf endet der Lichtleiter in einer Ausnehmung, so dass Licht direkt in das Medium strahlt. Mindestens ein Lichtleiter ist an einen Lichtempfänger auf der Platine angeschlossen und leitet Licht aus dem Medium, z.B. Streulicht, welches in das Ende des Lichtleiters fällt, das in den Sensorkopf ragt, zum Lichtempfänger zurück.

Besonders günstig und verlustarm ist es, wenn Lichtleitfasern gemäß der DE 20 2009 004 334 direkt in, in den Kapselungen der optischen Bauelemente angebrachten, Ausnehmungen eingesteckt oder -geklebt werden.

Der Halter wird von einem Schutzrohr umgeben, durch das sich dieser mit den Lichtleitern axial erstreckt.

An seinem einen Ende werden Schutzrohr und Grundgehäuse mittels einer Verbindungshülse fest und lösbar miteinander verbunden. Diesem Ende gegenüberliegend wird das Schutzrohr mit dem Sensorkopf so verbunden, dass der Halter, welcher sich durch das Schutzrohr erstreckt, mit einem Ende in den Sensorkopf ragt.

Im Sensorkopf kann für den Halter zu dessen Positionierung eine Führung vorgesehen sein.

Am Ende des Sensorkopfs, das den Sensorfinger abschließt, sind auf dieser Seite Ausnehmungen vorgesehen, in die die Enden der Lichtleiter münden und hier nach außen gegenüber dem Medium abgedichtet werden. Alternativ werden in die Ausnehmungen Linsen eingepresst, die in Kontakt zu den Enden der Lichtleiter im Sensorkopf stehen.

Um die Divergenz der in die Lichtleiter ein- bzw. ausgekoppelten Lichtstrahlen zu verringern, können direkt an den Enden der Lichtleiter, die in den Sensorkopf ragen, Faserkollimatoren angeschlossen sein.

In einer Ausführungsform verlaufen zwei Lichtleiter entlang der Längsseite des Halters bis in den Sensorkopf und münden dort in zwei Ausnehmungen, die auf einer den Sensorkopf nach außen begrenzenden Fläche liegen, wobei Licht axial aus- und auch eingekoppelt wird. Mittels dieser Anordnung können Transmissionsmessungen, beispielsweise zur Konzentrationsbestimmung, sowie 180'-Streulichtmessungen zur Bestimmung des Trübungsgrads von Medien durchgeführt werden.

In einer weiteren Ausführungsform nimmt eine der Ausnehmungen in der den Sensorkopf nach außen abschließenden Fläche einen Strahlteiler, wie zum Beispiel ein Prisma auf. So kann bei ansonsten gleicher Anordnung, wie bei der vorherigen Ausführungsform beschrieben, auf einfache Weise bewirkt werden, dass ausgekoppeltes Licht und eingekoppeltes Licht in einem rechten Winkel zueinander stehen. Somit wird eine 90°-Messung ermöglicht.

Durch die Verwendung von mehreren Umlenkelementen und mehr als zwei Lichtleitern, sind parallel 90°- und 180°-Messungen durchführbar.

Selbstverständlich sind hier weitere Kombinationen und auch Geometrien der Lichtleiter und optischen Bauelemente denkbar.

In einer weiteren Ausführungsform ist eines der optischen Bauelemente ein Spektrometer, vorzugsweise ein Mikrospektrometer, zur Absorptionsmessung.

Einzelheiten des erfindungsgemäßen optischen Sensorfingers ergeben sich aus der folgenden Beschreibung unter Bezugnahme auf die beigefügten Zeichnungen, In den Zeichnungen zeigen:
**Fig. 1** Explosionsansicht eines erfindungsgemäßen Sensorfingers;
**Fig. 2 a-d** schematische Darstellung von Sensorkopfvarianten;
**Fig. 3** Draufsicht auf einen Sensorkopf von außen;
**Fig. 4** Draufsicht ins Innere eines Sensorkopfs nach **Fig.3**;
**Fig. 5** Seitenansicht auf Halter mit Lichtleiter; und
**Fig. 6** in einen Leitungsabschnitt eingebauten Sensorfinger.

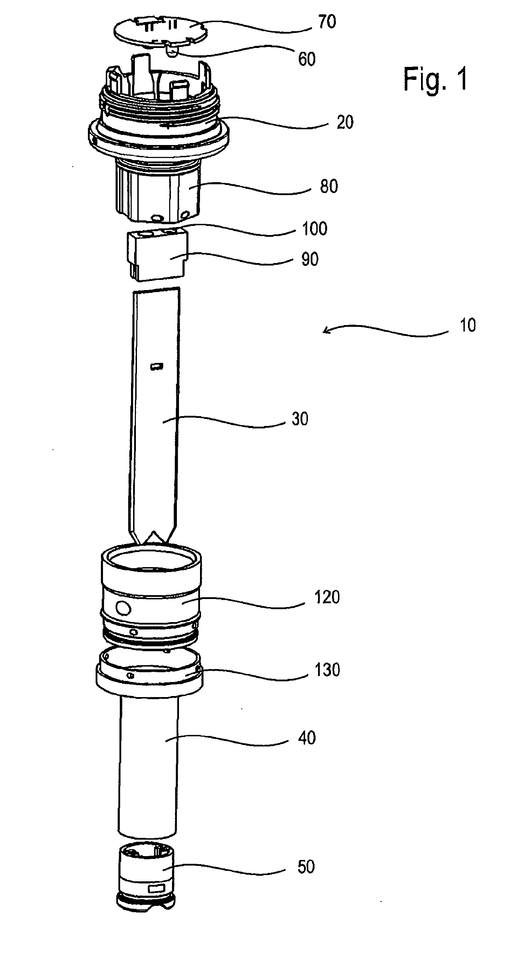

**Fig. 1** zeigt eine Explosionsansicht eines erfindungsgemäßen modularen optischen Sensorfingers 10 mit einem Grundgehäuse 20, einem länglichen Halter 30, einem Schutzrohr 40 und einem Sensorkopf 50.

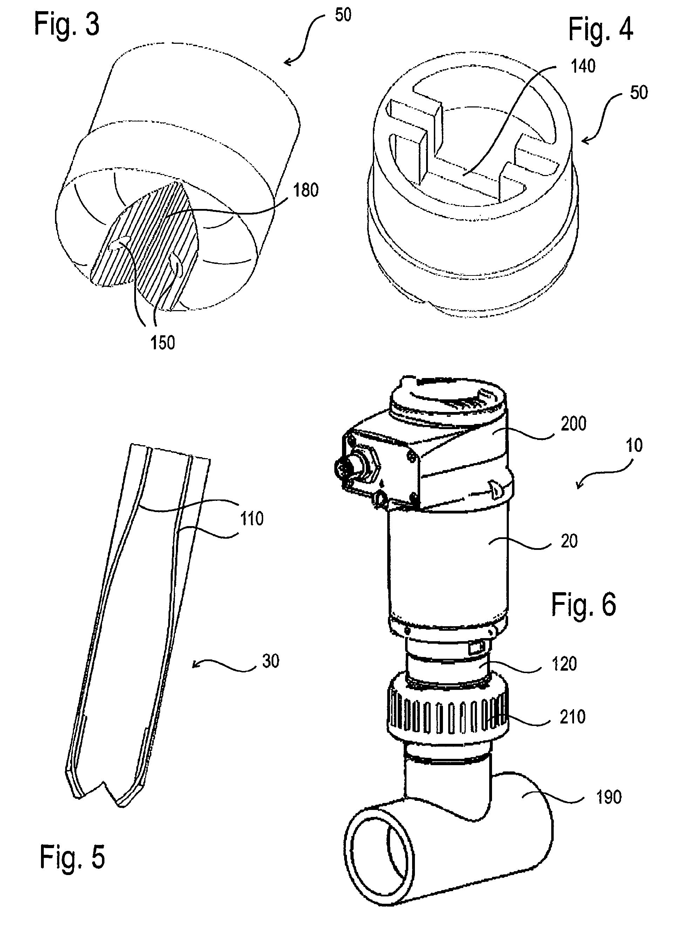

Das Grundgehäuse 20 weist ein Bodenteil (dargestellt in **Fig. 1**) auf und bildet zusammen mit einer Hülse und einem Deckel **(****Fig. 6**) einen Raum zur Aufnahme von Elektronik sowie optischen Bauelementen, wie LEDs, Photodioden oder Laser.

Die optischen Bauelemente 60 sind auf einer Platine 70 angeordnet, die in das Grundgehäuse 20 eingelegt wird. Die elektrischen Kontaktierungen der optischen Bauelemente 60 ragen ins Innere des Grundgehäuses 20 und werden dort mit der Elektronik verbunden. Die Kapselungen der optischen Bauelemente 60 weisen vom Grundgehäuse 20 weg in Richtung Schutzrohr 40.

Mindestens eines der optischen Bauelemente 60 ist ein Lichtsender und eines ein Lichtempfänger.

Es ist besonders vorteilhaft, dass die optischen Bauelemente 60 auf der Platine 70 im Grundgehäuse 20 angeordnet sind. Dadurch sind diese leicht austauschbar, falls diese beispielsweise auf Grund von Verschleiß ausgewechselt werden müssen. In diesem Fall muss nur das robuste Grundgehäuse 20 geöffnet werden, ohne dass der empfindlichere Sensorkopf 50 vom Umbau betroffen wäre. Alternativ ist es möglich bei Bedarf eine ganze Platine durch eine andere ersetzen.

Im Grundgehäuse 20 sind auf der Seite, die in Richtung Schutzrohr 40 zeigt, Befestigungsmittel 80 für einen Steckverbinder 90 angeordnet. Der Steckverbinder 90 weist auf der Seite, die an das Grundgehäuse 20 angrenzt, Ausnehmungen 100 auf zur Aufnahme der Kapselungen der optischen Bauelemente 60. Die gegenüberliegende Seite des Steckverbinders 90 wird mit dem länglichen Halter 30 für Lichtleiter 110 verbunden.

Die Verbindung von Steckverbinder 90 und Halter 30 bewirkt, dass auch die Lichtleiter 110 mit den optischen Bauelementen 60 verbunden sind.

Die Kapselungen der optischen Bauelemente 60 sind vorzugsweise mit Ausnehmungen versehen, welche die Enden der Lichtleiter 110 aufnehmen. Besonders günstig ist es, wenn hierbei zusätzlich ein optischer Klebstoff verwendet wird.

Wie in **Fig. 5** dargestellt, sind auf dem Halter 30 Lichtleiter 110 angeordnet und verlaufen über die gesamte Länge des Halters 30.

Vorzugsweise sind für die Lichtleiter 110 auf dem Halter 30 Nuten vorgesehen, in die diese eingelegt und somit sicher positioniert werden. Somit ist ein unerwünschtes Verrutschen der Lichtleiter 110 auf dem Halter 30 ausgeschlossen. Es sind aber auch andere Verbindungstechniken zwischen Halter 30 und Lichtleiter 110, wie beispielsweise Kleben, möglich.

In einer weiteren Ausführungsform wird an Stelle des Halters 30 mit den Lichtleitern 110 ein Halter mit integrierten Lichtleitern eingesetzt. Verfahren zur Herstellung von integrierten Lichtleitern in ein Substrat, bestehend aus einem transparenten Polymerwerkstoff, sind bekannt,

Der Halter 30 wird bezüglich seiner Längsausdehnung umgeben vom Schutzrohr 40, durch welches er sich axial erstreckt. Das Schutzrohr 40 verhindert, dass die Lichtleiter 110 durch äußere mechanische Einflüsse unerwünscht brechen oder anderweitig beschädigt werden können.

Das Schutzrohr 40 wird mittels einer Verbindungshülse 120 an das Grundgehäuse 20 durch beispielsweise Gewinde oder Schnappmechanismus angeschlossen. Das Schutzrohr weist an dieser Seite vorzugsweise einen Verbindungsflansch 130 auf. Dadurch kann der Durchmesser des Schutzrohrs 40 optimal auf die Breite des Halters 30 abgestimmt werden.

An dem Ende des Schutzrohrs 40, das der Verbindungshülse 120 und dem Grundgehäuse 20 gegenüberliegt, ist das Schutzrohr 40 mit dem Sensorkopf 50, in den der Halter 30 mit den Lichtleitern 110 eintaucht, verbunden.

Entsprechend **Fig. 4** ist im Sensorkopf 50 für den Halter 30 eine Führung 140 vorgesehen. Dadurch werden Stabilität und Zuverlässigkeit des Systems erhöht.

Im Sensorkopf 50 sind gemäß **Fig. 3** Ausnehmungen 150 angeordnet, in die die Enden der Lichtleiter 110 auf dem Halter 30 ragen, wenn der Sensorkopf 50 mit dem Schutzrohr 40 verbunden ist. Die Enden der Lichtleiter 110 werden in den Ausnehmungen 150 beispielsweise mittels Klebstoff abgedichtet.

In einer anderen Ausführungsform werden in die Ausnehmungen 150 im Sensorkopf 50 Linsen eingepresst, die mit den Enden der Lichtleiter 110 verbunden sind.

Besonders vorteilhaft ist es, wenn die Lichtleiter 110 nicht direkt in die Ausnehmungen 150 eintauchen oder mit den Linsen verbunden sind, sondern wenn dazwischen zusätzlich Faserkollimatoren oder Fokussierer 160, die mit den Lichtleitern 110 in engem Kontakt stehen, eingesetzt werden.

Von einem Lichtsender, der auf der Platine 70 angeordnet ist, wird Licht in ein erstes Ende eines Lichtleiters 110 eingekoppelt, gelangt zu dessen zweitem Ende, welches in eine Ausnehmung 150 im Sensorkopf 50 ragt und strahlt in das Medium, in welches der Sensorfinger 10 mit seinem Sensorkopf 50 eintaucht. In ein Ende eines zweiten Lichtleiters 110, das in eine weitere Ausnehmung 150 des Sensorkopfs 50 ragt, wird Licht aus dem Medium eingekoppelt und mittels Lichtleiter 110 zu dessen zweitem Ende geleitet, welches mit einem Lichtempfänger auf der Platine 70 verbunden ist. Das aus dem Medium eingekoppelte Licht kann je nach Anordnung der beiden Enden der Lichtleiter 110 im Sensorkopf 50 zueinander zu einer 90°- oder 180°-Messung verwendet werden.

Der Sensorkopf 50 kann je nach gewünschtem Messprinzip, das angewendet werden soll, geometrisch unterschiedlich ausgestaltet und mit zusätzlichen optischen Bauelementen, wie zum Beispiel Prismen, ausgestattet sein, wodurch sich eine große Anzahl von Kombinationsmöglichkeiten ergibt.

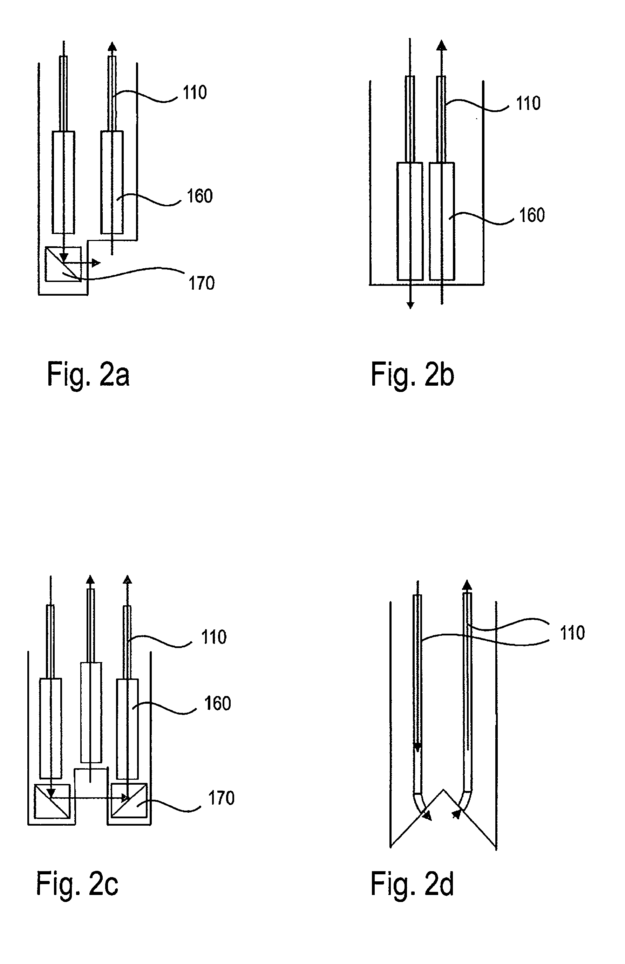

In **Fig. 2** sind schematisch verschiedene Varianten je nach gewünschtem Messprinzip und -aufbau dargestellt. Die Darstellung ist schematisch und betrifft teilweise den Halter 30 und teilweise den Sensorkopf 50. Die Lichtwege sind mittels Pfeilen dargestellt.

**Fig. 2b** zeigt einen Aufbau, in dem die Enden der Lichtleiter 110 und die Faserkollimatoren 160 im Wesentlichen parallel angeordnet sind. Auf diese Weise kann zur Bestimmung des Trübungsgrads von Medien eine 180°-Streulichtmessung durchgeführt werden.

In **Fig. 2a** ist bezüglich der Lichtleiter und -kollimatoren der gleiche Aufbau, wie im vorhergehenden Beispiel beschrieben, dargestellt. Zusätzlich ist in die Ausnehmung 150 im Sensorkopf 50 ein Umlenkelement 170 eingebracht. Das Umlenkelement 170, beispielsweise ein Prisma, lenkt Licht, das vom Lichtsender über den Lichtleiter 110 zum Ende des Lichtleiters und Kollimator im Sensorkopf 50 geleitet wird in einem 90°-Winkel zum ursprünglich gesendeten Licht um. Der zweite Kollimator und Lichtleiter, welcher mit dem Lichtempfänger auf der Platine 70 verbunden ist, empfängt so Streulicht aus dem Medium, das im 90° Winkel zum ins Medium eingestrahlten Licht abgestrahlt wird.

Ein oder mehrere Umlenkelemente 170 können entweder direkt in Ausnehmungen 150 im Sensorkopf 50 eingesetzt werden, oder in die Ausnehmungen 150 werden Linsen eingebracht, und die Umlenkelemente 170 werden direkt davor angeordnet.

Eine weitere Ausführungsform ist in **Fig. 2c** dargestellt. In den Sensorkopf 50 ragen drei parallele Enden von Lichtleitern 110, verbunden jeweils mit einem Kollimator 160, wobei die beiden äußeren auf Umlenkelemente 170 in den Ausnehmungen 150 im Sensorkopf 50 treffen und der mittlere Lichtleiter mit Kollimator direkt zu einer Ausnehmung 150 geführt ist, die im Vergleich zu den beiden äußeren Ausnehmungen etwas in Richtung Schutzrohr 40 nach Innen versetzt ist. Für diese Ausführungsform wird entsprechend **Fig. 3** vorzugsweise an einem balligen Sensorkopfende, welches in direktem Kontakt zum Medium steht, diametral eine Ausnehmung in Form eines Zweiflachs 180 angebracht. Die beiden äußeren Ausnehmungen 150 befinden sich gegenüberliegend auf den beiden den Zweiflach 180 begrenzenden Seitenflächen und die Ausnehmung für den mittleren Lichtleiter im Scheitel desselben, wobei alle drei Ausnehmungen 150 in der gleichen Ebene liegen. Diese Anordnung im Sensorkopf 50 ermöglicht eine gleichzeitige Messung von Transmission und Streulicht. Licht, das vom Lichtsender durch den Lichtleiter 110 über ein erstes Umlenkelement 170 durch das Medium strahlt, fällt auf ein zweites Umlenkelement 170 und wird in den Lichtleiter 110 eingekoppelt, der mit einem Lichtempfänger verbunden ist. Gleichzeitig wird dabei auftretendes Streulicht in den mittleren Lichtleiter eingekoppelt, der ebenfalls mit einem Lichtempfänger auf der Platine verbunden ist.

Zur Erfassung der Transmission ist hierbei eines der optischen Bauelemente ein Mikrospektrometer. Das Mikrospektrometer ist neben der Elektronik im Grundgehäuse angeordnet und dient in der Ausführungsform 2c als Lichtempfänger.

**Fig. 2d** zeigt eine Ausführungsform, bei der die Enden von zwei Lichtleitern zu Ausnehmungen 150 im Sensorkopf 50 führen, wobei im Sensorkopf 50, wie im vorherigen Beispiel beschrieben, diese sich auf Seitenflächen der keilförmigen Rille 180 gegenüberliegen. Licht strahlt in das Medium ein, und Streulicht in einem 90° Winkel dazu wird in den zweiten Lichtleiter eingekoppelt, der mit dem Lichtempfänger verbunden ist.

In **Fig. 6** ist ein erfindungsgemäßer Sensorfinger dargestellt, der in einem Leitungsabschnitt 190 so montiert ist, dass der Sensorkopf in diesen hineinragt und in direktem Kontakt mit dem Medium steht, welches sich im Leitungsabschnitt 190 befindet. Vom Grundgehäuse 20, bestehend aus Bodenteil, Hülse und Deckel, ist die Hülse erkennbar, die die Elektronik und die Platine 70 aufnimmt. Der Deckel ist als optionale Anzeige-/Bedieneinheit 200 ausgestaltet.

Der Sensorfinger 10 wird mittels Fitting 210 an den Rohrleitungsabschnitt 190 angeschlossen.

## Patentansprüche

1. Modularer optischer Sensorfinger mit einem Grundgehäuse, das Elektronik/Optik-Bauelemente aufnimmt, einem länglichen Halter, an dem wenigstens zwei Lichtleiter gehalten sind, die sich zwischen den beiden Längsenden des Halters erstrecken, einem Schutzrohr, durch das sich der Halter mit den Lichtleitern axial erstreckt, und einem auswechselbaren Sensorkopf, der an dem einen Ende des Schutzrohres angeschlossen ist, dessen anderes Ende mit dem Grundgehäuse verbunden ist, wobei die Lichtleiter an einem Ende optisch an Optik-Bauelemente im Grundgehäuse angekoppelt sind und am anderen Ende in den Sensorkopf ragen.

2. Sensorfinger nach Anspruch 1, bei dem die Elektronik/Optik-Bauelemente, von denen mindestens eines als Lichtsender und eines als Lichtempfänger wirkt, auf einer Platine angeordnet sind.

3. Sensorfinger nach Anspruch 1 oder 2, bei dem die Optik-Bauelemente mittels eines Steckverbinders an die Lichtleiter angeschlossen sind.

4. Sensorfinger nach einem der Ansprüche 1 bis 3, bei dem eines der Optik-Bauelemente ein Mikrospektrometer ist.

5. Sensorfinger nach einem der Ansprüche 1 bis 3, bei dem das Schutzrohr einen Verbindungsflansch aufweist, der an einer Verbindungshülse angeschlossen ist, die ihrerseits an dem Grundgehäuse angeschlossen ist.

6. Sensorfinger nach einem der vorstehenden Ansprüche, bei dem der Träger aus einem transparenten Polymerwerkstoff besteht, und die Lichtleiter in den Träger integriert sind.

7. Sensorfinger nach einem der vorstehenden Ansprüche, bei dem an den Enden der Lichtleiter, die in den Sensorkopf ragen, jeweils ein Faserkollimator oder Fokussierer angeordnet ist.

8. Sensorfinger nach einem der vorstehenden Ansprüche, bei dem der Sensorkopf an seinem freien Ende Licht axial ein- und auskoppelt.

9. Sensorfinger nach einem der vorstehenden Ansprüche, bei dem der Sensorkopf an seinem freien Ende Licht sowohl axial als auch radial ein-und/oder auskoppelt.

10. Sensorfinger nach Anspruch 9, bei dem die Ein/Auskopplung mittels eines Strahlteilers, insbesondere eines Prismas, erfolgt.

11. Sensorfinger nach einem der vorstehenden Ansprüche, bei dem der Sensorkopf zwei optische Umlenkelemente, die jeweils einem Lichtleiter zugeordnet sind, und zwischen den Umlenkelementen eine optische Meßstrecke aufweist.

12. Sensorfinger nach Anspruch 11, bei dem der Halter einen dritten Lichtleiter trägt, dessen in den Sensorkopf ragendes Ende Licht axial einkoppelt.

13. Sensorfinger nach einem der Ansprüche 1 bis 5, bei dem der Sensorkopf an seinem Ende, das ins Medium ragt, zwei aufeinander senkrechtstehende optische Ein-/Auskoppelflächen aufweist, an denen jeweils ein Lichtleiter senkrecht zu der betreffenden Koppelfläche endet.

14. Sensorfinger nach einem der vorstehenden Ansprüche, wobei der Sensorkopf Ausnehmungen aufweist, in welche die Enden der Lichtleiter ragen und dort abgedichtet sind.

15. Sensorfinger nach einem der vorstehenden Ansprüche, wobei der Sensorkopf an seinem den Sensorfinger abschließenden Ende im Wesentlichen eine ballige Form aufweist, in welche diametral eine Ausnehmung in Form eines Zweiflachs angebracht ist.
